Europäisches Patentamt

European Patent Office

Office européen des brevets

(19)

(11) Veröffentlichungsnummer: **0 145 801 B1**

# (12) EUROPÄISCHE PATENTSCHRIFT

(45) Veröffentlichungstag der Patentschrift:
16.09.87

(21) Anmeldenummer: **83112579.4**

(22) Anmeldetag: **14.12.83**

(51) Int. Cl.⁴: **H 04 N 1/46**, G 01 J 3/46

(54) **Verfahren und Schaltungsanordnung zur selektiven Korrektur von Farbtönen und Farben.**

(43) Veröffentlichungstag der Anmeldung:
**26.06.85 Patentblatt 85/26**

(45) Bekanntmachung des Hinweises auf die Patenterteilung:
**16.09.87 Patentblatt 87/38**

(84) Benannte Vertragsstaaten:
**AT BE CH DE FR GB IT LI NL SE**

(56) Entgegenhaltungen:
**DE - C - 2 628 053**

(73) Patentinhaber: **DR.-ING. RUDOLF HELL GmbH, Grenzstrasse 1-5, D-2300 Kiel 14 (DE)**

(72) Erfinder: **Jung, Eggert, Mühlenberg 25, D-2306 Schönberg (DE)**
Erfinder: **Keller, Hans, Hopfenlandsberg 32, D-2300 Kiel 14 (DE)**
Erfinder: **Hoffrichter, Ingo, Willy-Jacob-Weg 12, D-2300 Kiel 14 (DE)**

## Beschreibung

*Technisches Gebiet*

Die Erfindung bezieht sich auf das Gebiet der elektronischen Reproduktionstechnik und betrifft ein Verfahren und eine Schaltungsanordnung zur selektiven Korrektur von Farbtönen und Farben bei der Herstellung von Farbauszügen für den Mehrfarben-Mischdruck.

*Zugrundeliegender Stand der Technik*

Bei der Herstellung der Farbauszüge «Gelb», «Magenta», «Cyan» und «Schwarz» für den Mehrfarben-Mischdruck mittels eines Farbscanners werden durch optoelektronische Abtastung einer Farbvorlage Farbsignale gewonnen, welche durch eine Grund-Farbkorrektur in Farbauszugs-Signale umgewandelt werden. Die Farbauszugs-Signale, welche ein Mass für die Stärke des Farbauftrages der Druckfarben Gelb, Magenta Cyan und Schwarz beim Druckprozess sind, werden Aufzeichnungsorganen, z.B. Schreiblampen, zugeführt, deren Helligkeiten in Abhängigkeit der Farbauszugs-Signale moduliert werden. Die Schreiblampen belichten punkt- und zeilenweise Filme als Aufzeichnungsmedien, die nach der Entwicklung die Farbauszüge «Gelb», «Magenta», «Cyan» und «Schwarz» für den Mehrfarben-Mischdruck darstellen.

Durch die Grund-Farbkorrektur werden unter anderem Farbfehler beseitigt, die sich aufgrund der unterschiedlichen spektralen Eigenschaften von Vorlagenfarben und Druckfarben ergeben und gegebenenfalls die redaktionelle gewünschte farbliche Aussage der Reproduktion gegenüber dem Original geändert. Neben der Grund-Farbkorrektur wird häufig eine zusätzliche Selektiv-Farbkorrektur durchgeführt, mit der gezielt ganz bestimmte Farben oder Farbtöne korrigiert werden.

Bei der Selektiv-Farbkorrektur besteht dann das Problem, Selektiv-Korrektursignale zu erzeugen, die nur dann wirksam sind und die grundkorrigierten Farbauszugs-Signale beeinflussen, wenn in der Farbvorlage die speziell zu korrigierenden Farbtöne oder Farben erkannt werden.

Wenn die zu reproduzierende Farbvorlage einen Farbverlauf, d.h. unterschiedliche Farbsättigung und/oder Helligkeit innerhalb einer Farbe oder eines Farbtones aufweist, werden Selektiv-Korrektursignale benötigt, deren Stärke ebenfalls von dem Farbverlauf abhängt, um verlaufene, sich allmählich ändernde Korrekturstärken zu erreichen.

Aus der DE-PS 2 628 053 ist bereits eine Einrichtung zur Selektiv-Farbkorrektur bei einem Farbscanner zur Herstellung von Farbauszügen für den Mehrfarben-Mischdruck bekannt. Eine mit den bei der Vorlagen-Abtastung gewonnenen Farbmesswert-Signale beaufschlagte Farberkennungs-Schaltung, in der innerhalb des Farbraumes ein Erkennungsbereich für eine selektiv zu korrigierende Farbe (Korrekturfarbe) in der Farbvorlage abgegrenzt ist, selektiert bei der Vorlagen-Abtastung die ausgewählte Korrekturfarbe von den anderen Farben der Farbvorlage und erzeugt immer dann ein Selektiv-Korrektursignal, wenn die ausgewählte Korrekturfarbe in der Farbvorlage erkannt wird. Die bekannte Einrichtung hat den Nachteil, dass im wesentlichen nur prismatische Farberkennungsräume abgegrenzt werden können. Die Farberkennungsräume lassen sich daher nicht optimal nach Form und Grösse an die durch die Farbverläufe der Farbvorlage vorgegebenen Farbbereiche anpassen, so dass das Farberkennungs-Signal keine eindeutige Aussage über die Farbsättigung und/oder Helligkeit der abgetasteten Farben liefert. Aus dem Erkennungssignal lassen sich daher auch nicht die gewünschten verlaufenen Selektiv-Korrektursignale ableiten.

Ein weiterer Nachteil der bekannten Einrichtung zur Selektiv-Farbkorrektur besteht darin, dass die Farberkennungs-Schaltung nicht speziell zum Eingrenzen bzw. zum Erkennen von Farbtönen ausgebildet ist, so dass sich keine optimalen Selektiv-Korrektursignale für Farbtöne erzeugen lassen.

*Offenbarung der Erfindung*

Der im Anspruch 1 angegebenen Erfindung liegt daher die Aufgabe zugrunde, ein Verfahren und eine Schaltungsanordnung zur selektiven Korrektur von Farbtönen und Farben bei der Herstellung von Farbauszügen für den Mehrfarben-Mischdruck anzugeben, mit denen sich die zu korrigierenden Farbtöne und die zu korrigierenden Farben hinsichtlich Farbton, Farbsättigung und Helligkeit optimal abgrenzen lassen und mit denen Selektiv-Korrektursignale erzeugt werden, welche die Farbverläufe der zu korrigierenden Farbtöne und Farben genau wiedergeben.

Die angegebene Erfindung ermöglicht ausserdem, bei der Selektivkorrektur eine exakte Trennung eines für die Korrektur ausgewählten Farbtones von seinen Komplementär-Farbtönen bzw. von Farbtönen im Graubereich vorzunehmen.

Da das physiologische Farbempfinden des Menschens in den Begriffen Farbton, Farbsättigung und Helligkeit abläuft und auch die Erzeugung der Selektiv-Korrektursignale bei der Erfindung getrennt nach Farbton, Farbsättigung und Helligkeit erfolgt, hat die Erfindung ausserdem den Vorteil, dass die Wirkung der Selektiv-Korrektursignale für den Bediener überprüfbar ist.

*Kurze Beschreibung der Zeichnungen*

Die Erfindung wird im folgenden anhand der Figuren 1 bis 12 näher erläutert. Es zeigen:

Fig. 1 ein Ausführungsbeispiel für eine Schaltungsanordnung zur selektiven Farbkorrektur bei einem Farbscanner;

Fig. 2 eine grafische Darstellung der Koordinaten-Drehung;

Fig. 3 eine grafische Darstellung von Signalverläufen;

Fig. 4 eine grafische Darstellung von Signalverläufen;

Fig. 5 eine grafische Darstellung von Signalverläufen;

Fig. 6 eine grafische Darstellung von Signalverläufen;

Fig. 7 eine grafische Darstellung von Signalverläufen;

Fig. 8 ein Ausführungsbeispiel für ein Abtastorgan;

Fig. 9 ein Ausführungsbeispiel für eine Transformations-Stufe;

Fig. 10a ein Ausführungsbeispiel für einen Signalgenerator;

Fig. 10b eine grafische Darstellung;

Fig. 11 ein Ausführungsbeispiel für einen Farbsättigungs-Signalgenerator;

Fig. 12 ein Ausführungsbeispiel für eine Begrenzer-Stufe.

*Bester Weg zur Ausführung der Erfindung*

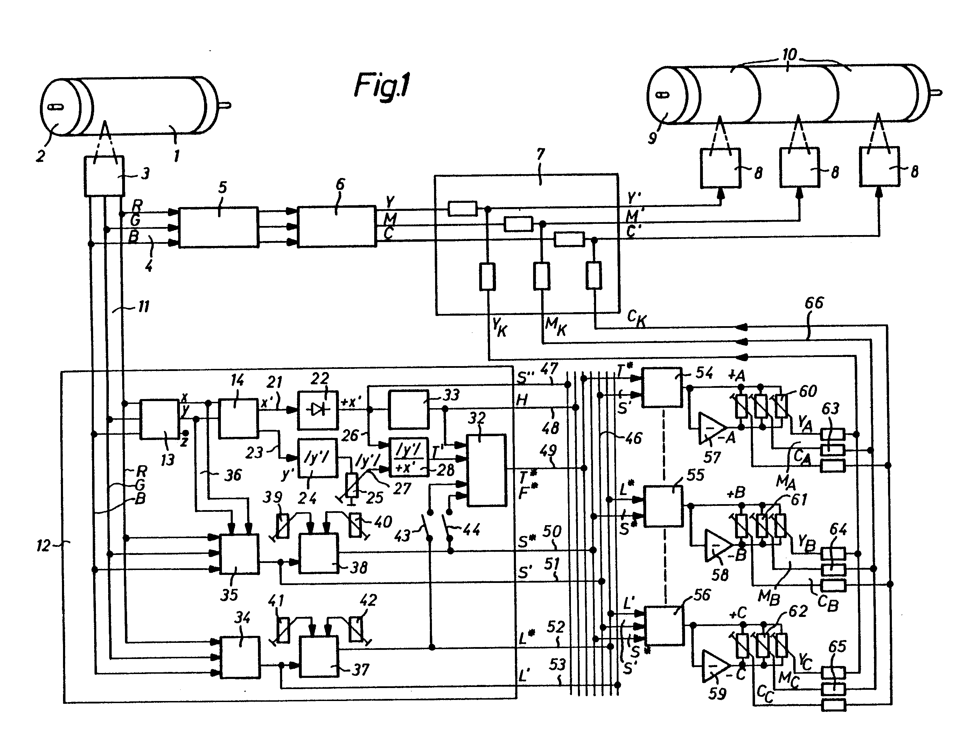

Fig. 1 zeigt ein Ausführungsbeispiel für eine Schaltungsanordnung zur Selektiv-Farbkorrektur bei einem Farbscanner, mit der Farbauszüge für den Mehrfarben-Mischdruck (Papierdruck) hergestellt werden.

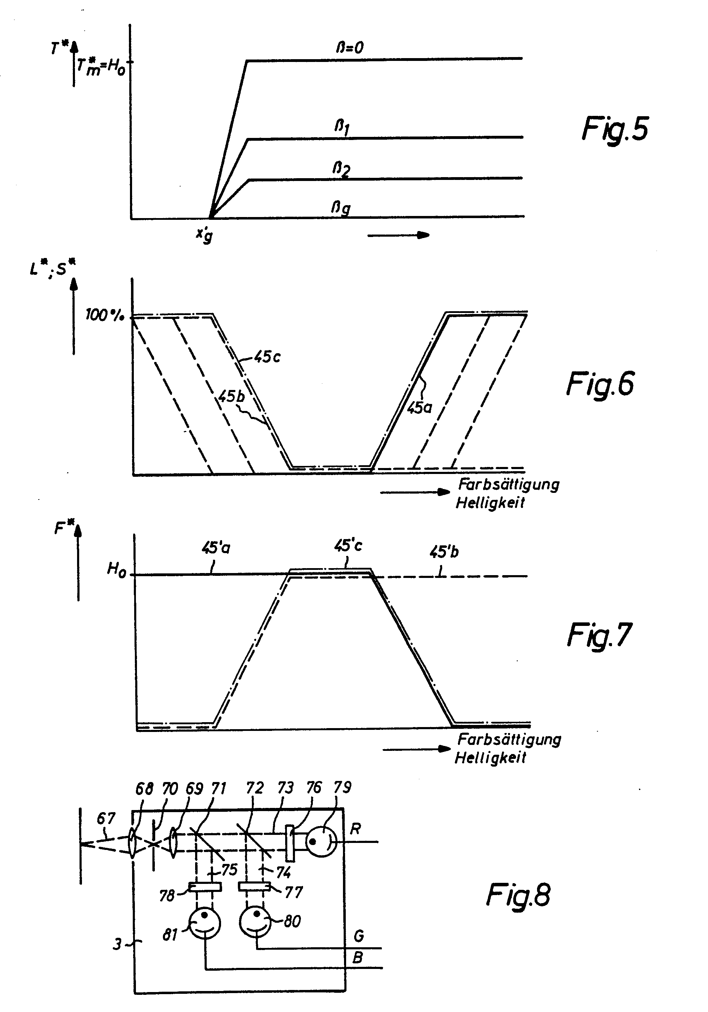

Eine Farbvorlage 1, von der Farbauszüge für den Mehrfarben-Mischdruck hergestellt werden sollen, befindet sich auf einer rotierenden Abtasttrommel 2 eines nicht näher dargestellten Farbscanners und wird von einem optoelektronischen Abtastorgan 3 punkt- und zeilenweise, trichromatisch abgetastet. Das von der abgetasteten Farbvorlage 1 reflektierte oder durchgelassene Abtastlicht wird im optoelektronischen Abtastorgan 3 mit Hilfe von Farbteilern, Korrekturfiltern und optoelektronischen Wandlern in die Farbmesswert-Signale R, G und B umgewandelt, welche ein Mass für die Intensitäten der Grundfarbenanteile «Rot», «Grün» und «Blau» an den abgetasteten Farben sind. Das optoelektronische Abtastorgan 3, welches axial zur Abtasttrommel 2 verschiebbar ist, wird sowohl zum Ausmessen einzelner Farbpunkte in der Farbvorlage 1 als auch zum flächenmässigen, punkt- und zeilenweisen Abtasten der Farbvorlage 1 während der eigentlichen Aufzeichnung der Farbauszüge verwendet. Ein Ausführungsbeispiel für ein optoelektronisches Abtastorgan zeigt Fig. 8.

Die Farbmesswert-Signale R, G, und B gelangen über Leitungen 4 an eine Logarithmier-Stufe 5, in der sie in Farbmesswert-Signale R', G' und B' logarithmiert oder teillogarithmiert und gegebenenfalls noch nach einer Gradationsfunktion nichtlinear verändert werden. Der Logarithmier-Stufe 5 ist eine erste Farbkorrektur-Schaltung 6 zur Grund-Farbkorrektur nachgeschaltet, in der die Farbmesswert-Signale R', G' und B' nach den Gesetzmässigkeiten der subtraktiven Farbmischung in die Farbauszugs-Signale Y, M und C zur Aufzeichnung der Farbauszüge «Gelb», «Magenta» und «Cyan» sowie gegebenenfalls noch in das Farbauszugs-Signal K für die Aufzeichnung des Farbauszuges «Schwarz» umgesetzt werden.

In einer Überlagerungs-Stufe 7 werden den grundkorrigierten Farbauszugs-Signalen Y, M und C Selektivkorrektur-Signale $Y_K$, $M_K$ und $C_K$ additiv überlagert. Die nunmehr zusätzlich selektiv korrigierten Farbauszugs-Signale Y', M' und C' gelangen von der Überlagerungs-Stufe 7 an Aufzeichnungsorgane 8, in Form von Schreiblampen, deren Helligkeiten durch die zugeordneten Farbauszugs-Signale Y', M' oder C' moduliert werden. Auf einer ebenfalls rotierenden Aufzeichnungsstrommel 9 sind Aufzeichnungsmedien 10, z.B. Filme, aufgespannt. Die Aufzeichnungsorgane 8 bewegen sich gemeinsam axial an der Aufzeichnungstrommel 9 entlang und belichten punkt- und zeilenweise die aufgespannten Filme. Die belichteten und entwickelten Filme sind die gewünschten Farbauszüge für den Mehrfarben-Mischdruck.

Die im Abtastorgan 3 gewonnenen Farbmesswert-Signale R, G und B werden über Leitungen 11 auf einen Signalerzeuger 12 gegeben.

Aufbau und Wirkungsweise des Signalerzeugers 12 soll nachfolgend näher erläutert werden, und zwar für den Fall, dass bei der Herstellung der Farbauszüge ein ausgewählter Farbton, nachfolgend mit Korrekturfarbton bezeichnet, selektiv korrigiert werden soll. Die Farbmesswert-Signale R, G und B auf den Leitungen 11 werden zunächst in einer Umformer-Stufe 13 logarithmiert oder teillogarithmiert und gegebenenfalls nach einer Gradationskurve korrigiert. Die logarithmierten Farbmesswert-Signale R', G, und B' werden durch eine Matrizierung gemäss Gleichungen (1) in Chrominanz-Signale x und y und ein Luminanz-Signal z umgeformt.

$$x = a_{11} R' + a_{12} G' + a_{13} B'$$
$$y = a_{21} R' + a_{22} G' + a_{23} B' \qquad (1)$$
$$z = a_{31} R' + a_{32} G' + a_{33} B'$$

Die Matrizierung entspricht einer Transformation der Farbkoordinaten des kartesischen RGB-Farbraumes in die Farbkoordinaten x, y und z des kartesischen Chrominanz/Luminanz-Farbraumes, in dem die Farbkoordinaten x und y die Lage der Farborte der Farben in der Chrominanzebene und die Farbkoordinate z die Helligkeitswerte der Farben kennzeichnen.

Der gewünschte Korrekturfarbton $T_0$ wird zunächst durch Vorgabe eines Farbmesswert-Tripels $R_0$, $G_0$ und $B_0$ bzw. durch Vorgabe seiner durch Matrizierung gebildeten Chrominanzwerte $x_0$ und $y_0$ oder durch Ausmessen eines Probenpunktes in der Farbvorlage 1 mit Hilfe des optoelektronischen Abtastorgans 3 definiert. Die Chrominanzwerte $x_0$ und $y_0$ werden erfindungsgemäss durch eine auf den ausgewählten Korrekturfarbton $T_0$ einstellbare Matrizierung nach Gleichungen (2) in entsprechende Chrominanzwerte $x'_0$ und $y'_0$ transformiert, wobei die Transformationskoeffizienten a, b, c und d so bestimmt werden, dass die Bedingungen $x'_0 > 0$ und $y'_0 = 0$ erfüllt sind.

$$x'_0 = \quad bx_0 + cy_0$$
$$y'_0 = - dx_0 + ey_0 \qquad (2)$$

Im gewählten Ausführungsbeispiel werden vorzugsweise Transformationskoeffizienten in der Form $b = e = \cos \alpha$ und $c = -d = \sin \alpha$ verwendet, so dass die Matrizierung einer Drehung eines X'Y'-Farbkoordinatensystems um einen Winkel $\alpha$ gegenüber dem ursprünglichen XY-Farbkoordinatensystem nach Gleichungen (3) entspricht.

$$x'_0 = \quad x_0 \cos \alpha + y_0 \sin \alpha$$
$$y'_0 = - x_0 \sin \alpha + y_0 \cos \alpha \qquad (3)$$

Der zur Erfüllung der Bedingungen $x'_0 > 0$ und $y'_0 = 0$ erforderliche Winkel $\alpha_0$ wird in einer Transformations-Stufe 14 durch einen automatischen Abgleichvorgang bei laufender Überprüfung der Bedingungen $x'_0 > 0$ und $y'_0 = 0$ in einer inter-

nen Überwachungs-Stufe der Transformations-Stufe 14 bestimmt, indem der Winkel α solange verändert wird, bis die Überwachungs-Stufe die Erfüllung der Bedingungen festgestellt hat. Der dabei gefundene Winkel $\alpha_0$ = arc tan $y_0/x_0$ entspricht dem Korrekturfarbton $T_0$, und die X'-Achse des um den Winkel $\alpha_0$ gedrehten X'Y'-Farbkoordinatensystems verläuft durch den in die Chrominanzebene transformierten Farbort $F'_0$ des Korrekturfarbtons $T_0$. Die beschriebene Koordinaten-Drehung entspricht einer Drehung des Chrominanz/Luminanz-Farbraumes um die Luminanz-Achse (z).

Der gefundene Winkel $\alpha_0$ wird in der Transformations-Stufe 14 gespeichert und bei der Aufzeichnung der Farbaufzüge zur laufenden Transformation der Chrominanz-Signale x und y in die gedrehten Chrominanz-Signale x' und y' gemäss Gleichungen (4) verwendet, wobei das gedrehte Chrominanz-Signal y' von Null verschieden ist für alle Farbtöne der abgetasteten Farben, die von dem ausgewählten Korrekturfarbton $T_0$ abweichen und gleich Null ist für alle Farbtöne, die mit dem ausgewählten Korrekturfarbton $T_0$ übereinstimmen.

$$\begin{aligned} x' &= x \cos \alpha_0 + y \sin \alpha_0 \\ y' &= -x \sin \alpha_0 + y \cos \alpha_0 \end{aligned} \qquad (4)$$

Es liegt im Rahmen der Erfindung, die Matrizierung nach Gleichungen (1) und (4) in einem Schritt durchzuführen.

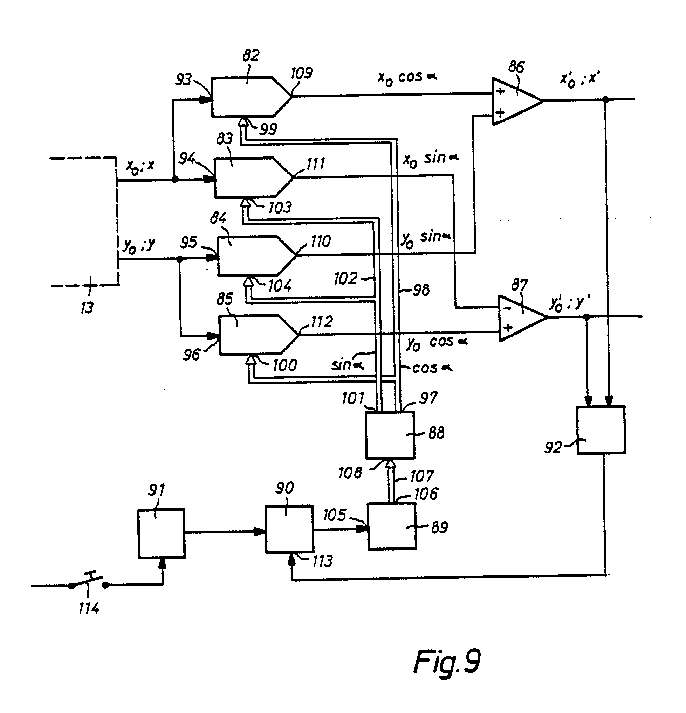

Ein detailliertes Ausführungsbeispiel für die Transformations-Stufe 14 wird in Fig. 9 angegeben.

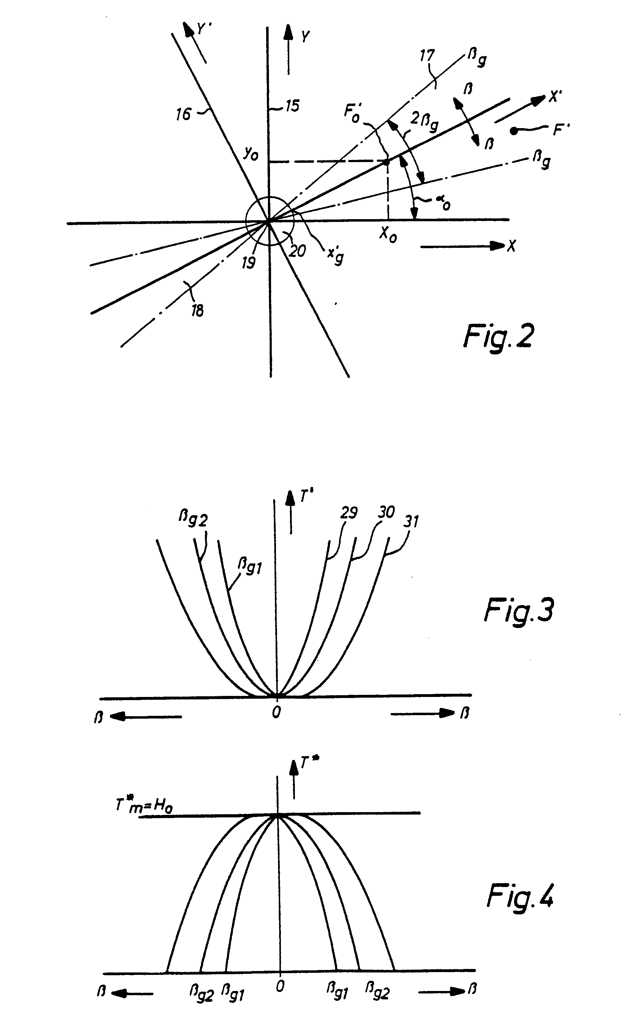

Die zuvor beschriebene Koordinaten-Drehung wird anhand einer grafischen Darstellung in Fig. 2 nochmals verdeutlicht.

Fig. 2 zeigt die Chrominanzebene des Chrominanz/Luminanz-Farbraumes mit dem XY-Farbkoordinatensystem 15, wobei die Z-Achse (Grauachse) des Chrominanz/Luminanz-Farbraumes senkrecht zur Chrominanzebene verläuft. Ein transformierter Farbort $F'_0$ eines ausgewählten Korrekturfarbtons $T_0$ ist im XY-Farbkoordinatensystem 15 durch die Farbkoordinaten $x_0$ und $y_0$ definiert. Gleichzeitig ist das um den Winkel $\alpha_0$ gedrehte X'Y'-Farbkoordinatensystem 16 dargestellt, dessen X'-Achse durch den transformierten Farbort $F'_0$ verläuft, so dass der transformierte Farbort $F'_0$ im gedrehten X'Y'-Farbkoordinatensystem 16 die Farbkoordinaten $x'_0 > 0$ und $y'_0 = 0$ aufweist. Der Winkel $\alpha_0$ = arc tan $y_0/x_0$ entspicht dem Korrekturfarbton $T_0$ im XY-Farbkoordinatensystem 15. Gleichzeitig ist symmetrisch zur X'-Achse des gedrehten X'Y'-Farbkoordinatensystems 16 ein sektorförmiger Farbton-Bereich 17 um den Korrekturfarbton $T_0$ dargestellt, dessen Grenzwinkel $\beta_g$ (Öffnungswinkel 2 $\beta_g$) bezogen auf die X-Achse zur Eingrenzung der Korrekturfarbtöne $T_0$ einstellbar ist. Für einen beliebigen Farbort F' innerhalb des Farbton-Bereiches 17 entspricht in erster Näherung bei kleinem Winkel β das gedrehte Chrominanz-Signal x' der Farbsättigung und der Quotient y'/x' = tan β der Abweichung des Farbtons der abgetasteten Farben von dem ausgewählten Korrekturfarbton $T_0$, wobei der Quotient mit wachsender Abweichung ansteigt.

Ausserdem zeigt Fig. 2 noch die zu den abgegrenzten Korrekturfarbtönen gehörenden Komplementärfarbtöne innerhab eines Sektors 18, der durch Spiegelung des Farbton-Bereiches 17 an der Y'-Achse des X'Y'-Farbkoordinatensystems 16 entstanden ist. Das gedrehte Chrominanz-Signal x' ist für die abgegrenzten Farbtöne positiv, dagegen für die Komplementärfarbtöne negativ. Bei der Herstellung von Farbauszügen erweist es sich sehr oft als notwendig, Farbschwankungen oder Verläufe im «Grau» einheitlich zu korrigieren. Von einem solchen zylindrischen oder tonnenförmigen Bereich um die Grauachse 19 ist in Fig. 2 noch die Schnittfläche 20 dargestellt, deren Radius durch einen Grenz-Farbsättigungswert $x'_g$ definiert ist.

Zurück zu Fig. 1

Das in der Transformations-Stufe 14 erzeugte gedrehte Chrominanz-Signal x' wird über eine Leitung 21 einer Auswahl-Stufe 22 in Form einer Dioden-Schaltung zugeführt, welche nur die positiven Werte des gedrehten Chrominanz-Signals x' als Signal +x' durchlässt. Am Ausgang der Auswahl-Stufe 22 erscheint somit immer nur dann ein Signal, wenn die Farbtöne der von der Farbvorlage 1 abgetasten Farben, bezogen auf die Y'-Achse des gedrehten X'Y'-Farbkoordinatensystems 16 (Fig. 2), auf der Seite des abgegrenzten Farbton-Bereiches 17, liegen, wenn es sich also um keine Komplementärfarbtöne handelt, so dass in vorteilhafter Weise eine exakte Trennung von Farbtönen und Komplementärfarbtönen erreicht wird. Das Signal +x' ist näherungsweise ein Mass für die Farbsättigung. Das gedrehte Chrominanz-Signal y' gelangt von der Transformations-Stufe 14 über eine Leitung 23 auf eine Betrags-Stufe 24. In der Betrags-Stufe 24 wird der Betrag des gedrehten Chrominanz-Signals y' als Signal /y'/ gebildet.

Durch amplitudenmässige Einstellung des Signals /y'/ mittels eines Potentiometers 25 wird der Grenzwinkel $\beta_g$ für den gewünschten Farbton-Bereich 17 (Fig. 2) festgelegt. Die Signale +x' und /y'/ werden über Leitungen 26 und 27 einer Dividier-Stufe 28 zugeführt, in der durch Quotientenbildung ein Farbton-Signal T' gemäss Gleichung (5) gewonnen wird.

$$T' = \frac{/y'/}{+x'} = \tan \beta \qquad (5)$$

Das Farbton-Signal T' liefert eine Aussage über die betragsmässige Abweichung des Farbtones einer auf der Farbvorlage 1 abgetasteten Farbe von dem ausgewählten Korrekturfarbton $T_0$ nach beiden Richtungen hin, wobei bei Farbton-Übereinstimmung (β = 0) das Farbton-Signal T' = 0 ist. Das Farbton-Signal T' kann in der Dividier-Stufe 28 auch noch amplituden- und formmässig verändert werden.

Fig. 3 zeigt verschiedene Verläufe des Farbton-Signals T' in Abhängigkeit des Winkels β. Die Verläufe 29 und 30 ergeben sich bei unterschiedlich eingestellten Grenzwinkeln $\beta_g$ des Farbton-Bereiches 17 für den Fall, dass in der Dividier-Stufe 28 keine zusätzliche Signalbeeinflussung stattfindet. Der Verlauf 31 ergibt sich, wenn das Farbton-Signal T' in der Dividier-Stufe 28 im Bereich kleiner Winkel β verflacht wird.

In einer Differenz-Stufe 32 wird aus dem Farbton-Signal T' und einem Hilfssteuersignal H nach Gleichung (6) ein Farbton-Steuersignal T* erzeugt.

$$T* = H - T' \qquad (6)$$

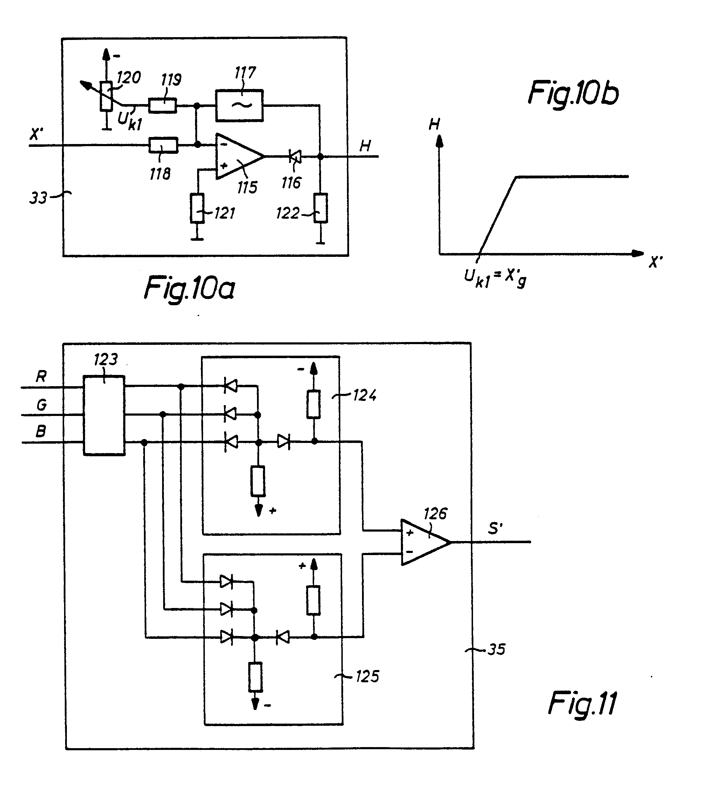

Das Hilfssteuersignal H, das in einem Signalgenerator 33 erzeugt wird, hat beispielsweise einen konstanten Wert $H_0$, der dann vozugsweise $H_0 = \tan y_0/x_0$ gewählt wird. Vorteilhafter ist es aber, das Hilfssteuersignal H, wie im beschriebenen Ausführungsbeispiel, in erster Näherung von der Farbsättigung, d.h. vom Signal $+x'$, abhängig zu machen. In diesem Falle hat das Hilfssteuersignal $H = f(x')$ von einem maximalen Farbsättigungswert bis in die Nähe des bereits in Fig. 2 erläuterten Grenz-Farbsättigungswertes $x'_g$ den konstanten Wert $H_0$, fällt dann ab und hat zwischen dem Grenz-Farbsättigungswert $x'_g$ und der Grauachse $(x' = 0)$ den Wert Null. Fig. 10 zeigt ein Ausführungsbeispiel für den Signalgenerator 33.

In Fig. 4 sind verschiedene Verläufe des Farbton-Steuersignals T* in Abhängigkeit des Winkels β für verschiedene Grenzwinkel $β_g$ der Farbton-Bereiche 17 und für ein konstantes Hilfssteuersignal $H_0$ bzw. für den zwischen dem Grenz-Farbsättigungswert $x'_g$ und dem maximalen Farbsättigungswert liegenden Bereich des Hilfssteuersignals $H = f(x')$ dargestellt. Das Farbton-Steuersignal T* hat für Farbtöne der abgetasteten Farben, die dem ausgewählten Korrekturfarbton $T_0$ entsprechen (β = 0), einen maximalen Wert $T*_m = H_0$, der bei $H_0 = \tan y_0/x_0$ genau dem Korrekturfarbton $T_0$ entspricht. Mit steigender Abweichung der Farbtöne der abgetasteten Farben von dem Korrekturfarbton $T_0$ fällt das Farbton-Steuersignal T* ab und erreicht bei dem jeweiligen Grenzwinkel $β_g$ der eingestellten Farbton-Bereiche 17 den Wert T* = 0.

Alternativ zur Einstellung des Grenzwinkels $β_g$ des Farbton-Bereiches 17 mit Hilfe des Potentiometers 25 kann der Grenzwinkel $β_g$ auch durch Amplitudenänderung des Farbton-Signals T' in der Dividier-Stufe 28 oder des Wertes $H_0$ des Hilfssteuersignals H in dem Signalgenerator 33 eingestellt werden.

Fig 5 zeigt verschiedene Verläufe des Farbton-Steuersignals T* in Abhängigkeit des Signals x' bzw. der Farbsättigung für den Fall, dass das Hilfssteuersignal $H = f(x')$ und der Winkel β Parameter sind. Durch die Abhängigkeit des Farbton-Steuersignals T* von der Farbsättigung wird in vorteilhafter Weise eine Abgrenzung nach «Grau» erreicht.

Wenn eine ausgewählte Farbe der Farbvorlage 1, nachfolgend mit Korrekturfarbe bezeichnet, bei der Herstellung der Farbauszüge selektiv korrigiert werden soll, muss ein dreidimensionaler Farb-Bereich im Farbton/Farbsättigung/Luminanz-Farbraum abgegrenzt werden, indem der sektorförmige Farbton-Bereich zusätzlich hinsichtlich der Helligkeit und/oder der Farbsättigung eingegrenzt wird und ein Farb-Steuersignal F* erzeugt wird.

Zur Eingrenzung bezüglich der Helligkeit wird in einem Luminanz-Signalgenerator 34, dem die Farbmesswert-Signale R, G und B über Leitungen 11 zugeführt werden, aus mindestens einem, vorzugsweise aus allen drei Farbmesswert-Signalen R, G und B ein Luminanz-Signal L' gemäss der Beziehung

$L' = f_1 R + f_2 G + f_3 B$ gewonnen. Als Luminanz-Signal L' kann auch das in der Umformer-Stufe 13 gebildete Luminanz-Signal z verwendet werden, falls an der Bildung des Luminanz-Signals L' alle drei Farbmesswert-Signale R, G und B beteiligt sind. In diesem Falle kann der Luminanz-Signalgenerator 34 entfallen.

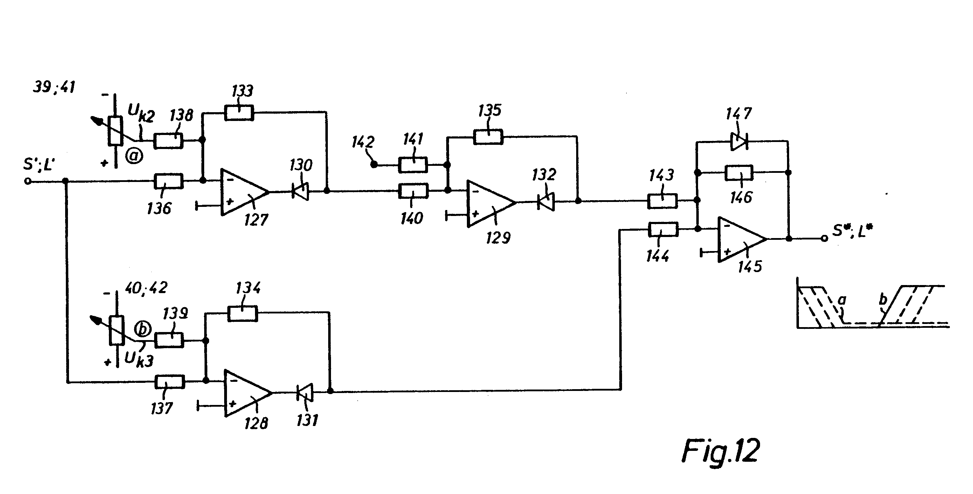

Zur Eingrenzung bezüglich der Farbsättigung erzeugt ein Farbsättigungs-Signalgenerator 35 ein Farbsättigungs-Signal S'. Das Farbsättigungs-Signal S' kann gemäss der Gleichung $S' = \sqrt{x^2 + y^2}$ aus den in der Umformer-Stufe 13 gebildeten Chrominanz-Signalen x und y gewonnen werden, welche dem Farbsättigungs-Signalgenerator 35 über die gestrichelt dargestellten Leitungen 36 zugeführt werden. In diesem Falle gibt das Farbsättigungs-Signal S' die exakten Farbsättigungswerte der abgetasteten Farben wieder. Der Farbsättigungs-Signalgenerator 35 enthält in diesem Falle entsprechende Rechenbausteine (Quadrierer, Addierer, Radizierer), die aber keine hohe Arbeitsgeschwindigkeit zulassen. Um diese Schwierigkeit zu beheben, wird in vorteilhafter Weise ein an die exakten Farbsättigungswerte angenähertes Farbsättigungs-Signal S' verwendet, welches im Farbsättigungs-Signalgenerator 35 aus den Farbmesswert-Signalen R, G und B abgeleitet wird, indem dort laufend das maximale und das minimale Farbmesswert-Signal festgestellt und die Differenzen der Extremwerte gebildet werden, welche näherungsweise dem Farbsättigungs-Signal S' entsprechen, da das maximale Farbmesswert-Signal einer abgetasteten Farbe jeweils die Farbsättigung und das minimale Farbmesswert-Signal den Grauton dieser Farbe repräsentiert. Da der Farbsättigungs-Signalgenerator 35 nunmehr nicht die gennanten Rechenbausteine enthält, kann durch die angegebene Signalbildung in vorteilhafter Weise die Aufzeichnungsgeschwindigkeit bei der Herstellung der Farbauszüge erhöht werden. Ein Ausführungsbeispiel für den Farbsättigungs-Signalgenerator 35 zeigt Fig. 11.

Dem Luminanz-Signalgenerator 34 ist eine Begrenzer-Stufe 37 nachgeschaltet, in der aus dem Luminanz-Signal L' ein Luminanz-Steuersignal L* erzeugt wird. Ebenso ist dem Farbsättigungs-Signalgenerator 35 eine entsprechende Begrenzer-Stufe 38 nachgeschaltet, welche das Farbsättigungs-Signal S' in ein Farbsättigungs-Steuersignal S* umwandelt. Die Bildung des Luminanz-Steuersignals L* und des Farbsättigungs-Steuersignal S* erfolgt durch Verschiebung der Einsatzpunkte des Luminanz-Signals L' bzw. des Farbsättigungs-Signals S' mit Hilfe von Kompensationsspannungen, welche an Potentiometern 39 und 40 bzw. 41 und 42 einstellbar sind. Gleichzeitig können das Luminanz-Signal L' und das Farbsättigungs-Signal S' in den Begrenzer-Stufen 37 und 38 noch amplitudenmässig und/oder nach Gradationskurven nichtlinear verändert werden.

Ein Ausführungsbeispiel für die identisch aufgebauten Begrenzer-Stufen 37 und 38 zeigt Fig. 12. Die Begrenzer-Stufen 37 und 38 können aber auch als einfache Inverter aufgebaut sein, in denen L* = const. – L' bzw. S* = const. – S' gebildet wird.

Luminanz-Steuersignal L* und/oder Farbsättigungs-Steuersignal S* werden über Schalter 43 und 44 auf die Differenz-Stufe 32 gegeben, in der das Farb-Steuersignal F* gemäss Gleichung (7) gebildet wird.

$$F^* = H - T' - L^* - S^*$$
$$\text{bzw.} \quad F^* = T^* - L^* - S^* \quad (7)$$

Alternativ kann das Farb-Steuersignal F* auch durch Multiplikation der entsprechenden Signale gewonnen werden. Mit Hilfe der Potentiometer 39 und 40 bzw. 41 und 42 an den Begrenzer-Stufen 37 und 38 können die Helligkeits- und Farbsättigungswerte festgelegt werden, bei denen die Helligkeit und die Farbsättigung der abgetasteten Farben Einfluss auf den Verlauf des Farb-Steuersignals F* nehmen. Mit Hilfe der Schalter 43 und 44 kann ausserdem eine Auswahl der Signale getroffen werden, die an der Bildung des Farb-Steuersignals F* beteiligt werden sollen.

Der Verlauf des Farb-Steuersignals F* in bezug auf den Farbton der abgetasteten Farben entspricht dem in Fig. 4 dargestellten Verlauf des Farbton-Steuersignals T*, wenn Helligket und Farbsättigung unberücksichtigt bleiben.

Fig. 6 zeigt verschiedene, durch die Potentiometer 39 bis 42 an den Begrenzer-Stufen 37 und 38 einstellbare Verläufe des Luminanz-Steuersignals L* in Abhängigkeit der Helligkeit bzw. des Farbsättigungs-Steuersignals S* in Abhängigkeit der Farbsättigung.

In Fig. 7 sind die zugehörigen Verläufe des Farb-Steuersignals F* in Abhängigkeit der Helligkeit bzw. der Farbsättigung dargestellt. Zur Vereinfachung der Darstellung ist angenommen, dass der abgetastete Farbton gerade dem ausgewählten Korrekturfarbton $T_0$ entspricht.

Sollen im wesentlichen dunkle Farben korrigiert werden, wird mit Hilfe eines der Potentiometer an der Begrenzer-Stufe 37 z.B. der Verlauf 45a des Luminanz-Steuersignals L* eingestellt, wodurch sich der Verlauf 45'a des Farb-Steuersignals F* ergibt. In diesem Falle hat das Farb-Steuersignal F* bei dunklen Farben einen hohen Signalpegel, und die Signalbegrenzung setzt erst bei helleren Farben ein.

Sollen dagegen im wesentlichen helle Farben korrigiert werden, wird mit Hilfe des anderen Potentiometers an der Begrenzer-Stufe 37 beispielsweise der Verlauf 45b eingestellt, und es ergibt sich der Verlauf 45'b des Farb-Steuersignals F*. In diesem Falle hat das Farb-Steuersignal F* bei hellen Farben einen hohen Signalpegel, der zu dunklen Farben hin begrenzt wird. Auf diese Weise können in vorteilhafter Weise zu korrigierende helle und dunkle Farben exakt voneinander getrennt werden.

Zur Abgrenzung eines Helligkeits-Bereiches kann mit Hilfe beider Potentiometer an der Begrenzer-Stufe 37 auch der Verlauf 45c des Luminanz-Steuersignals L* erzeugt werden. In diesem Falle hat das Farb-Steuersignal F* den Verlauf 45'c, wodurch eine Begrenzung zu hellen und dunklen Farben um Farben mittlerer Helligkeit erreicht wird. So lassen sich im wesentlichen Farben korrigieren, die in oder in der Nähe der Chrominanzebene liegen.

Durch eine sinngemässe Einstellung der Potentiometer an der Begrenzer-Stufe 38 kann eine Abgrenzung der zu korrigierenden Farben hinsichtlich kleiner oder grosser Farbsättigungswerte sowie hinsichtlich eines Farbsättigungs-Bereiches vorgenommen werden.

Die im Signalerzeuger 12 gebildeten Signale werden auf ein Koppelfeld 45 gegeben, und zwar das angenäherte Farbsättigungs-Signal S'' = x' über eine Leitung 47, das Hilfssteuersignal H vom Signalgenerator 33 über eine Leitung 48, wahlweise das Farbton-Steuersignal T* oder das Farb-Steuersignal F* von der Differenz-Stufe 32 über eine Leitung 49, das Farbsättigungs-Steuersignal S* von der Begrenzer-Stufe 38 über eine Leitung 50, das Farbsättigungs-Signal S' vom Farbsättigungs-Signalgenerator 35 über eine Leitung 51, das Luminanz-Steuersignal L* von der Begrenzer-Stufe 37 über eine Leitung 52 und das Luminanz-Signal L' vom Luminanz-Signalgenerator 34 über eine Leitung 53.

Im Koppelfeld 46 werden diejenigen Signale ausgewählt, die hinsichtlich Farbton-Farbsättigung oder Helligkeit in zweckmässiger Weise an der Bildung der Selektiv-Korrektursignale beteiligt werden sollen, und auf eine Anzahl von Verknüpfungs-Stufen, im Ausführungsbeispiel auf die Verknüpfungs-Stufen 54, 55 und 56 gegeben, die dem Koppelfeld 46 nachgeschaltet sind. In den Verknüpfungs-Stufen 54, 55 und 56 werden jeweils aus mindestens einem der im Koppelfeld 46 zur Verfügung stehenden Signale positive Ausgangssignale +A bzw. +B und +C abgeleitet, welche gleichzeitig in Invertern 57, 58 und 59 in entsprechende negative Ausgangssignale −A bzw. −B und −C invertiert werden. Zwischen jedem positiven und negativen Ausgangssignalpaar ist ein Tripel von Potentiometern 60, 61 und 62 geschaltet. An jedem Tripel von Potentiometern 60, 61 und 62 wird ein Korrektursignal-Tripel ($Y_A$, $M_A$, $C_A$), ($Y_B$, $M_B$, $C_B$) und ($Y_c$, $M_c$, $C_c$) abgegriffen, wobei durch die gewählte Potentiometereinstellung sowohl der Betrag als auch das Vorzeichen der Korrektursignale und damit die Korrekturstärke und die Korrekturrichtung (positiv/negativ) bestimmt werden.

Die Korrektursignal-Tripel werden über Summierwiderstände 63, 64 und 65 zu den Selektiv-Korrektursignalen $Y_K$, $M_K$ und $C_K$ für die Farbauszugs-Signale Y, M und C vereinigt und über Leitungen 66 an die Überlagerungs-Stufe 7 gegeben.

Einige Beispiele sollen die Bildung der Selektiv-Korrektursignale $Y_K$, $M_K$ und $C_K$ erläutern.

Wenn ein bestimmter Farbton der Farbvorlage 1 selektiv zu korrigieren ist, wird der entsprechende Korrekturfarbton $T_0$, wie ausführlich erläutert, in dem Signalerzeuger 12 voreingestellt und die Selektiv-Korrektursignale $Y_K$, $M_K$ und $C_K$ aus dem Farbton-Steuersignal T* abgeleitet.

Wenn eine Farbe mit der Farbvorlage 1 selektiv korrigiert werden soll, wird im Signalerzeuger 12 der Farbton-Bereich zusätzlich hinsichtlich Helligkeit und Farbsättigung abgegrenzt und die Selektiv-Korrektursignale $Y_K$, $M_K$ und $C_K$ aus dem Farb-Steuersignal F* abgeleitet.

Die Selektiv-Korrektursignale $Y_K$, $M_K$ und $C_K$ sind, wie aus den dargestellten Verläufen des Farbton-Steuersignals T* und des Farb-Steuersignals F* hervorgeht, bei Abtastung des Korrekturfarbtons in der Farbvorlage maximal, nehmen mit wachsendem Abstand der abgetasteten Farbtöne von dem eingestellten Korrekturfarbton ab und erreichen den Wert Null, wenn die abgetasteten Farbtöne am Rande des abgegrenzten Farbton- bzw. Farb-Bereiches liegen. Man erhält somit in vorteilhafter Weise verlaufende Selektiv-Korrektursignale, die sich optimal an die Farbverläufe in den Farbtönen oder Farben der abgetasteten Farbvorlage 1 anpassen.

Manchmal erweist es sich als zweckmässig, einen bestimmten Farbton proportional zur Farbsättigung zu korrigieren. In diesem Falle wird beispielsweise das Farbton-Steuersignal $T^*$ mit dem Farbsättigungs-Signal $S'$ in der Verknüpfungs-Stufe 54 miteinander verknüpft. Dadurch ergeben sich Selektiv-Korrektursignale $Y_K$, $M_K$ und $C_K$, welche im Graubereich bis zum Grenz-Farbsättigungswert $x'_g$ nahezu unwirksam sind, während sie für bunte Farben (hohe Farbsättigungswerte) nicht von der Farbsättigung beeinflusst werden und nur vom Farbton abhängen.

In einem weiteren Beispiel sollen helle Farben, sogenannte Pastellfarben, selektiv korrigiert werden. In diesem Falle erweist es sich als zweckmässig, entsprechende Korrektursignale $Y_B$, $M_B$ und $C_B$ durch multiplikative Verknüpfung des Luminanz-Signals $L'$ mit dem Farbsättigungs-Steuersignal $S^*$, das in der Begrenzer-Stufe 39 durch Invertierung des Farbsättigungs-Signals $S'$ entstanden ist, in der Verknüpfungs-Stufe 55 zu bilden. Die Korrektursignale $Y_B$, $M_B$ und $C_B$ sind dann in einem Teilfarbraum wirksam. Die Flächen konstanter Signalgrösse haben die Form eines Kegels, der mit der Spitze bei Schwarz liegt und dessen Kegelachse die Grauachse ist, wobei die Korrektursignale ausserhalb der Kegeloberfläche Null sind und nach dem Inneren zu ansteigen.

In einem weiteren Beispiel sollen nur die bunten Pastellfarben beeinflusst, die Graugradation dagegen unverändert beibehalten werden. Dann erweist es sich als zweickmässig, Korrektursignale $Y_C$, $M_C$ und $C_C$ durch multiplikative Verknüpfung des Luminanz-Signals $L'$, des Farbsättigungs-Signals $S'$ und des Farbsättigungs-Steuersignals $S^*$, das wiederum durch Invertierung des Farbsättigungs-Signals $S'$ in der Begrenzer-Stufe 39 entstanden ist, in der Verknüpfungs-Stufe 56 zu gewinnen. Dann steigen die Korrektursignale $Y_C$, $M_C$ und $C_c$ von der Kegeloberfläche zunächst wieder nach innen an und fallen mit weiterer Annäherung an die Grauachse wieder auf Null ab.

Die Erfindung ist selbstverständlich nicht auf die zuvor beschriebenen Beispiele für die Bildung von Selektiv-Korrektursignalen beschränkt.

Fig. 8 zeigt ein Ausführungsbeispiel für das optoelektronische Abtastorgan 3. Das von der Farbvorlage 1 reflektierte oder durchgelassene Abtastlicht 67 gelangt durch Objektive 68 und 69 und durch eine Blende 70 in das Abtastorgan 3 und wird dort mittels zweier dichroitischer Farbteiler 71 und 72 in drei Teilbündel 73, 74 und 75 aufgespalten. Die Teilbündel 73, 74 und 75 fallen durch Korrektur-Farbfilter 76, 77 und 78 auf drei optoelektronische Wandler 79, 80 und 81, die das empfangene Teillicht entsprechend den Intensititäten der Grundfarben-Anteile an den abgetasteten Farben in die primären Farbmesswert-Signale R, G und B umwandeln.

Fig. 9 zeigt ein Ausführungsbeispiel für die Transformations-Stufe 14.

In der Transformations-Stufe 14 werden die Chrominanz-Signale $x_0$ und $y_0$ des ausgewählten Korrekturfarbtons $T_0$ während eines Abgleichvorganges durch monotone Änderung des Winkels $\alpha$ gedreht, bis die gedrehten Chrominanz-Signale $x'_0 > 0$ und $y'_0 = 0$ sind, wobei der dabei gefundene Winkel $\alpha_0$ festgehalten wird. Diese Koordinaten-Drehung läuft gemäss Gleichung (3) ab.

Während der punkt- und zeilenweisen Abtastung der selektiv zu korrigierenden Farbvorlage 1 werden dann die laufend erzeugten Chrominanz-Signale x und y gemäss Gleichung (4) gedreht.

Die Transformations-Stufe 14 besteht aus vier Multiplizier-Stufen 82, 83, 84 und 85, einer Addier-Stufe 86, eine Subtrahier-Stufe 87, einem Festwert-Speicher 88, einem Adresszähler 89, einer Tor-Stufe 90, einem Taktgenerator 91 sowie aus einer Überwachungs-Stufe 92.

Die Multiplizier-Stufen 82, 83, 84 und 85 sind in vorteilhafter Weise aus multiplizierenden D/A-Wandlern, z.B. aus integrierten Bausteinen vom Typ AD 7542 der Firma Analog Devices aufgebaut. In einen solchen multiplizierenden D/A-Wandler kann ein wählbarer Faktor in Form von Digitalwerten über einen Dateneingang eingegeben werden, die in einem internen Register speicherbar sind. Ein am Eingang des multiplizierenden D/A-Wandlers anstehendes analoges Signal wird mit dem eingestellten Faktor multipliziert, wobei das Produkt wiederum als analoges Signal am Ausgang des multiplizierenden D/A-Wandlers zur Verfügung steht.

Während des Abgleichvorganges wird das von der gestrichelt angedeuteten Umformer-Stufe 13 kommende Chrominanz-Signal $x_0$ auf die Eingänge 93 und 94 der Multiplizier-Stufen 82 und 83 gegeben, während das Chrominanz-Signal $y_0$ auf die Eingänge 95 und 96 der Multiplizier-Stufen 84 und 85 gelangt.

Im Festwert-Speicher 88 sind für Winkelwerte von 0-360° die entsprechenden Sinus- und Cosinus-Werte als Digitalwerte $b = e = \cos \alpha$ und $c = d = \sin \alpha$ durch die zugehörigen Winkelwerte $\alpha$ als Adressen des Festwert-Speichers 88 abrufbar gespeichert. Der Datenausgang 97 des Festwert-Speichers 88 für die Digitalwerte $b = e = \cos \alpha$ ist über einen Daten-Bus 98 mit den Dateneingängen 99 und 100 der Multiplizier-Stufen 82 und 85 und der entsprechende Datenausgang 101 für die Digitalwerte $c = d = \sin \alpha$ über einen Daten-Bus 102 mit den Dateneingängen 103 und 104 der Multiplizier-Stufen 83 und 84 verbunden.

Der einschaltbare Taktgenerator 91 steht über die Tor-Stufe 90 mit dem Takteingang 105 des Adresszählers 89 in Verbindung. Der Ausgang 106 des Adresszählers 89 ist über einen Adress-Bus an den Adresseingang 108 des Festwert-Speichers 88 angeschlossen. Die Ausgänge 109 und 110 der Multiplizier-Stufen 82 und 84 stehen mit der Addier-Stufe 86 und die Ausgänge 111 und 112 der Multiplizier-Stufen 83 und 85 mit der Subtrahier-Stufe 87 in Verbindung. Der Ausgang der Addier-Stufe 86 und der Ausgang der Subtrahier-Stufe 87 sind an die Überwachungs-Stufe 92 für die Bedingungen $x'_0 > 0$ und $y'_0 = 0$ angeschlossenen. Die Überwachungs-

Stufe 92 steht mit einem Steuereingang 113 der Tor-Stufe 90 in Verbindung.

Der Abgleichvorgang wird durch Einschalten des Taktgenerators 91 mit Hilfe einer Taste 114 eingeleitet. Der Zähltakt des Taktgenerators 91 wird in den Adresszähler 89, der vorher rückgesetzt wurde, eingezählt, wobei der ansteigende Zählerstand monoton ansteigenden Winkelwerten α entspricht. Der Adresszähler 89 ruft nacheinander die Adressen des Festwert-Speichers 88 auf, die zu den Winkelwerten α gehörenden Digitalwerte cos α und sin α werden in die Multiplizier-Stufen 82, 83, 84 und 85 übertragen und dort mit den entsprechenden Chrominanz-Signalen $x_0$ und $y_0$ multipliziert. Die Einzelprodukte werden gemäss Gleichung (3) addiert bzw. voneinander subtrahiert, so dass an dem Ausgang der Addier-Stufe 86 das gedrehte Chrominanz-Signal $x'_0$ und am Ausgang der Subtrahier-Stufe 87 das gedrehte Chrominanz-Signal $y'_0$ erscheint. Dabei werden die gedrehten Chrominanz-Signale $x'_0$ und $y'_0$ laufend von der Überwachungs-Stufe 92 überprüft. Die Überwachungs-Stufe 92 gibt ein Steuersignal an die Tor-Stufe 90 ab, wenn die Bedingungen erfüllt sind, wodurch der Zähltakt unterbrochen wird. Der dabei erreichte Zählerstand im Adresszähler 89 entspricht dem gesuchten Winkel $α_0$.

Fig. 10a zeigt ein Ausführungsbeispiel für den Signalgenerator 33 zur Erzeugung des Hilfssteuersignals H in Abhängigkeit des Signals x'.

Der Signalgenerator 33 besteht aus einem invertierenden Verstärker 115, dessen Ausgang über eine Diode 116 und über ein Netzwerk 117 mit dem invertierenden Eingang des Verstärkers 115 verbunden ist. Der invertierende Eingang des Verstärkers 115 ist ausserdem über einen ersten Summier-Widerstand 118 mit dem Signal x' beaufschlagt und über einen zweiten Summier-Widerstand 119 an ein Potentiometer 120 angeschlossen. An dem Potentiometer 120 kann eine Kompensationsspannung $U_{k1}$ eingestellt werden, die dem gewünschten Grenz-Farbsättigungswert $x'_g$ entspricht. Der nichtinvertierende Eingang des Verstärkers 115 ist über einen Widerstand 121 und die Anode der Diode 116 über einen Widerstand 122 an Messpotential gelegt. Bei Werten des Signals x', die betragsmässig kleiner als die Kompensationsspannung $U_{k1}$ sind, ist das Hilfssteuersignal H = 0. Erreicht das Signal x' betragsmässig die Kompensationsspannung $U_{k1}$, steigt das Hilfssteuersignal H entsprechend der im Netzwerk 117 eingestellten Verstärkung an und erreicht dann einen ebenfalls durch das Netzwerk 117 vorgegebenen Grenzwert $H_0$.

Fig. 10b zeigt den Verlauf des Hilfssteuersignals H am Ausgang des Signalgenerators 33.

Fig. 11 zeigt ein Ausführungsbeispiel für den Farbsättigungs-Signalgenerator 35 zur Erzeugung des Farbsättigungs-Signals S' aus den Farbmesswert-Signalen R, G und B.

Die vom nicht dargestellten Abtastorgan 1 gelieferten Farbmesswert-Signale R, G und B werden in einer Logarithmier-Stufe 123 logarithmiert oder teillogarithmiert und gleichzeitg einer Maximumauswahl-Stufe 124 und einer Minimumauswahl-Stufe 125 zugeführt, welche aus den Farbmesswert-Signalen R, G und B jeweils das maximale und minimale Farbmesswert-Signal feststellen. In einer der Maximumauswahl-Stufe 124 und der Minimumauswahl-Stufe 125 nachgeschalteten Substrahier-Stufe 126 wird das Farbsättigungs-Signal S' als Differenzsignal aus den festgestellten maximalen und minimalen Farbmesswert-Signalen gebildet, welches näherungsweise der Farbsättigung entspricht.

Fig. 12 zeigt ein Ausführungsbeispiel für die Begrenzer-Stufe 37 bzw. 38.

Die Begrenzer-Stufe besteht aus drei identisch aufgebauten, invertierenden Verstärkern 127, 128 und 129. Die Ausgänge der Verstärker 127, 128 und 129 sind jeweils über Dioden 130, 131 und 132 und über Widerstände 133, 134 und 135 mit den invertierenden Eingängen der Verstärker 127, 128 und 129 verbunden. Die invertierenden Eingänge der Verstärker 127 und 128 sind über erste Summier-Widerstände 136 und 137 gemeinsam mit dem Farbsättigungs-Signal S' bzw. dem Luminanz-Signal L' beaufschlagt. Der invertierende Eingang des Verstärkers 127 ist über einen Summier-Widerstand 138 mit den Potentiometern 39 bzw. 41 und der invertierende Eingang des Verstärkers 128 über einen Summier-Widerstand 139 mit den Potentiometern 40 bzw. 42 verbunden. Der invertierende Eingang des Verstärkers 129 ist über einen Summier-Widerstand 140 an den Ausgang des Verstärkers 127 und über einen weiteren Summier-Widerstand 141 an eine positive Spannungsquelle 142 angeschossen. Die Ausgänge der Verstärker 128 und 129 stehen über Summier-Widerstände 143 und 144 mit dem invertierenden Eingang eines Begrenzer-Verstärkers 145 in Verbindung, dessen Ausgang über eine Parallelschaltung eines Widerstandes 146 mit einer Begrenzer-Diode 147 auf den invertierenden Eingang gekoppelt ist. Am Ausgang des Begrenzer-Verstärkers 145 steht das Farbsättigungs-Steuersignal S* bzw. das Luminanz-Steuersignal L* mit den in Fig. 6 dargestellten Verläufen zur Verfügung. Mit den Potentiometern 39 bzw. 41 und 40 bzw. werden Kompensationsspannungen $U_{k2}$ und $U_{k3}$ eingestellt, welche die Einsatzpunkte der Spannungsbegrenzung bestimmen.

**Patentansprüche**

1. Verfahren zur selektiven Korrektur von Farbtönen und Farben einer Farbvorlage bei der Herstellung von Farbauszügen, bei dem

a) die Farbvorlage zur Gewinnung von Farbmesswert-Signalen punkt- und zeilenweise optoelektronisch abgetastet wird,

b) die Farbmesswert-Signale durch eine erste Korrektur in Farbsignale umgewandelt werden,

c) innerhalb eines Farbraumes der Bereich eines selektiv zu korrigierenden Farbtons oder einer selektiv zu korrigierenden Farbe abgegrenzt wird und selektive Korrektursignale erzeugt werden, wenn ein Farbton oder eine Farbe der abgetasteten Farbvorlage in den abgegrenzten Bereich fällt, und bei dem

d) die selektiven Korrektursignale für eine zweite Korrektur den Farbsignalen überlagert werden, dadurch gekennzeichnet, dass

e) die Farbmesswert-Signale (R, G, B) entsprechend einer Transformation des RGB-Farbraumes in den Chrominanz/Luminanz-Farbraum in Chrominanz-Signale (x, y) umgewandelt werden und aus den Chrominanz-Signalen (x, y) ein die Farbtöne der abgetasteten Farben kennzeichnendes Farbton-Signal (T') erzeugt wird,

f) aus den Farbmesswert-Signalen (R, G, B) ein die Farbsättigung der abgetasteten Farben kennzeichnendes Farbsättigungs-Signal (S') und ein die Helligkeit der abgetasteten Farben kennzeichnendes Luminanz-Signal (L') abgeleitet wird,

g) Farbton-Signal (T'), Farbsättigungs-Signal (S') und Luminanz-Signal (L') derart begrenzt werden, dass sie jeweils nur für wählbare Bereiche ungleich Null sind, wobei der Bereich des begrenzten Farbton-Signals (T*) einen selektiv zu korrigierenden Farbton (T$_0$) und alle drei Bereiche der begrenzten Signale (T*, S*, L*) eine selektiv zu korrigierende Farbe definierten, und

h) die selektiven Korrektursignale (Y$_K$, M$_K$, C$_K$) aus mindestens einem der begrenzten Signale (T*, S*, L*) oder aus einer Verknüpfung mindestens eines der begrenzten Singale (T*, S*, L*) mit dem Farbsättigungs-Signal (S*) und/oder dem Luminanz-Signal (L*) gewonnen werden.

2. Verfahren nach Anspruch 1, dadurch gekennzeichnet, dass vor der selektiven Farbkorrektur

a) der Farbort (F$_0$) des selektiv zu korrigierenden Farbtons (T$_0$) durch Farbwerte (R$_0$, G$_0$, B$_0$) festgelegt wird,

b) der Farbort (F$_0$) des zu korrigierenden Farbtons (T$_0$) durch eine erste Transformation seiner Farbwerte (R$_0$, G$_0$, B$_0$) in entsprechende Chrominanzwerte (x'$_0$, y'$_0$) derart in die Chrominanzebene des Chrominanz/Liminanz-Farbraumes transformiert wird, dass der transformierte Farbort (F$_0$) auf einem der Achsenabschnitte eines X'Y'-Farbkoordinatensystems (16) in der Chrominanzebene liegt, und die dazu erforderlichen Transformationskoeffizienten festgehalten werden, während der selektiven Farbkorrektur,

c) die Farborte (F) der Farbtöne der abgetasteten Farben laufend durch eine zweite Transformation der gewonnenen Farbmesswerte (R, G, B) in Chrominanzwerte (x', y') mit den zuvor ermittelten Transformationskoeffizienten in die Chrominanzebene transformiert werden,

d) diejenigen Chrominanzwerte (x', y') ausgewählt werden, deren zugehörige transformierte Farborte (F') in derselben Hälfte des X'Y'-Farbkoordinatensystems (16) liegen wie der transformierte Farbort (F'$_0$) des selektiv zu korrigierenden Farbtons (T$_0$),

e) zur Bildung des Farbton-Signals (T') der Quotient aus den Beträgen der ausgewählten Chrominanzwerte (x', y') gewonnen wird, wobei der Quotient jeweils dem Tangens des Winkels β entspricht, der von dem betreffenden Achsenabschnitt und einer Verbindungslinie zwischen Koordinatenursprung und transformiertem Farbort (F') des Farbtons einer abgetasteten Farbe eingeschlossen wird, wodurch das Farbton-Signal (T') ein Mass für die jeweilige betragsmässige Farbton-Abweichung des Farbtons einer abgetasteten Farbe von dem selektiv zu korrigierenden Farbton (T$_0$) ist und

f) durch Verknüpfung eines im wesentlichen konstanten Hilfssteuersignals (H) und dem Farbton-Signal (T') das begrenzte Farbton-Signal (T*) gewonnen wird, welches seinen grössten Wert beim Abtasten des selektiv zu korrigierenden Farbtons (T$_0$) und den Wert Null beim Abtasten eines Farbtons mit einer vorgegebenen maximalen Farbton-Abweichung hat, wodurch ein sektorförmiger Farbton-Bereich (17) um den betreffenden Achsenabschnitt bzw. um den selektiv zu korrigierenden Farbton (T$_0$) abgegrenzt wird.

3. Verfahren nach Anspruch 1 oder 2, dadurch gekennzeichnet, dass die Farbwerte des selektiv zu korrigierenden Farbtons (T$_0$) durch optoelektronisches Ausmessen eines entsprechenden Farbtons in der Farbvorlage festgelegt werden.

4. Verfahren nach einem der Ansprüche 1-3 dadurch gekennzeichnet, dass die vorgegebene maximale Farbton-Abweichung von dem selektiv zu korrigierenden Farbton (T$_0$) bzw. der Öffnungswinkel des Farbton-Bereiches (17) durch Amplitudenänderung der Chrominanzwerte (y') senkrecht zum betreffenden Achsenabschnitt, des Farbton-Signals (T') oder des Hilfssteuersignals (H) eingestellt wird.

5. Verfahren nach einem der Ansprüche 1-4, dadurch gekennzeichnet, dass das begrenzte Farbton-Signal (T*) durch Differenzbildung zwischen dem Hilfssteuersignal (H) und den kennzeichnenden Farbton-Signal (T') gewonnen wird.

6. Verfahren nach einem der Ansprüche 1-5, dadurch gekennzeichnet, das die erste Transformation der Farbmesswerte (R$_0$, G$_0$, B$_0$) als Farbwerte des selektiv zu korrigierenden Farbtons (T$_0$) in die Chrominanzwerte (x'$_0$, y'$_0$)

a) durch eine Matrizierung der Farbwerte (R$_0$, G$_0$, B$_0$) in die Chrominanzwerte (x$_0$, y$_0$) eines XY-Farbkoordinatensystems (15) in der Chrominanzebene entsprechend einer Transformation des RGB-Farbraumes in den Chrominanz/Luminanz-Farbraum nach den Gleichungen:

$$x_0 = a_{11} R_0 + a_{12} G_0 + a_{13} B_0$$
$$y_0 = a_{21} R_0 + a_{22} G_0 + a_{23} B_0$$

b) und durch eine von der Lage des Farbortes (F$_0$) des selektiv zu korrigierenden Farbtons (T$_0$) innerhalb der Chrominanzebenen abhängige Koordinatendrehung der Chrominanzwerte (x$_0$, y$_0$) des XY-Farbkoordinatensystems (15) in die Chrominanzwerte (x'$_0$, y'$_0$) eines gegenüber dem XY-Farbkoordinatensystems (15) um den Winkel α gedrehten X'Y'-Farbkoordinatensystems (16) entsprechend einer Drehung des Chrominanz/Luminanz-Farbraumes um die Luminanz-Achse (Z) nach den Gleichungen:

$$x'_0 = x_0 \cos \alpha + y_0 \sin \alpha$$
$$y'_0 = - x_0 \sin \alpha + y_0 \cos \alpha$$

erfolgt, wobei der Winkel (α$_0$) als Transformationskoeffizient so bestimmt wird, dass der transformierte Farbort (F'$_0$) des selektiv zu korrigierenden Farbtons (T$_0$) auf einem der Achsenabschnitte des X'Y'-Farbkoordinatensystems (16) liegt.

7. Verfahren nach einem der Ansprüche 1-6, dadurch gekennzeichnet, dass die zweite Transformation der Farbmesswerte (R, G, B) der Farbtöne der abgetasteten Farben in die Chrominanzwerte (x', y') der transformierten Farborte (F')

a) durch eine Matrizierung der Farbmesswerte (R, G, B) in die Chrominanzwerte (x, y) des XY-Farbkoordinatensystems (15) in der Chrominanzebene entsprechend einer Transformation des RGB-Farbraumes in den Chrominanz/Luminanz-Farbraum nach den Gleichungen:

$$x = a_{11} R + a_{12} G + a_{13} B$$
$$y = a_{21} R + a_{22} G + a_{23} B$$

b) und durch eine Koordinatendrehung der Chrominanzwerte (x, y) des XY-Farbkoordinatensystems (15) in die Chrominanzwerte (x', y') des X'Y'-Farbkoordinatensystems (16) um den festgestellten Winkel ($\alpha_0$) nach den Gleichungen:

$$x' = \phantom{-}x \cos \alpha_0 + y \sin \alpha_0$$
$$y' = -x \sin \alpha_0 + y \cos \alpha_0$$

erfolgt.

8. Verfahren nach Anspruch 6, dadurch gekennzeichnet, dass der Winkel ($\alpha$) durch einen automatischen Abgleich verändert wird, bis einer der Chrominanzwerte ($x'_0$ bzw. $y'_0$) im X'Y'-Farbkoordinatensystem (16) zu Null wird, wobei der dabei gefundene Winkel ($\alpha_0$) festgehalten wird.

9. Verfahren nach einem der Ansprüche 1-8, dadurch gekennzeichnet, dass das den Farbton kennzeichnende Farbton-Signal (T') vor der Verknüpfung mit dem Hilfssteuersignal (H) verformt wird.

10. Verfahren nach einem der Ansprüche 1-8, dadurch gekennzeichnet, dass zur Erzeugung des Farbsättigungs-Signals (S')

a) aus den Farbmesswerten (R, G, B) jeweils die maximalen und minimalen Farbmesswerte ausgewählt werden, und

b) das Farbsättigungs-Signal (S') aus den Differenzen von maximalen und minimalen Farbmesswerten gebildet werden.

11. Verfahren nach einem der Ansprüche 1-9, dadurch gekennzeichnet, dass das Hilfssteuersignal (H) von den Farbsättigungswerten der abgetasteten Farben in der Farbvorlage abhängig ist.

12. Verfahren nach Anspruch 11, dadurch gekennzeichnet, dass das Hilfssteuersignal (H) von dem Farbsättigungswert Null bis zu einem Grenz-Farbsättigungswert ($x_g$), welcher die Ausdehnung eines Graubereiches um die Luminanz-Achse (Z) des Chrominanz/Luminanz-Farbraumes definiert, Null ist und von dem Grenz-Farbsättigungswert ($x_g$) bis zu maximalen Farbsättigungswerten einen konstanten Wert ($H_0$) hat.

13. Schaltungsanordnung zur selektiven Korrektur von Farbtönen und Farben einer Farbvorlage bei der Herstellung von Farbauszügen, bestehend aus:

a) einem optoelektronischen Abtastorgan (3) zur Erzeugung von Farbmesswert-Signalen,

b) einer ersten Korrektur-Schaltung (5, 6), welche an das Abtastorgan (3) angeschlossen ist, zur Erzeugung von korrigierten Farbsignalen,

c) einer zweiten Korrektur-Schaltung, welche an das Abtastorgan (3) angeschlossen ist, zur Erzeugung von selektiven Korrektursignalen, und

d) einer Überlagerungs-Stufe (7), welche an die erste und zweite Korrektur-Schaltung angeschlossen ist, zur Überlagerung von Farbsignalen und selektiven Korrektursignalen, dadurch gekennzeichnet, dass die zweite Korrektur-Schaltung folgende Komponenten aufweist:

e) eine Transformations-Schaltung (13, 14), welche mit dem Abtastorgan (3) verbunden ist und die Farbmesswerte ($R_0$, $G_0$, $B_0$ bzw. R, G, B) in Chrominanzwerte ($x'_0$, $y'_0$ bzw. x', y') eines X'Y'-Farbkoordinatensystems (16) in der Chrominanzebene des Chrominanz/Luminanz-Farbraumes umwandelt,

f) eine Auswahl- und Betrags-Schaltung (22, 24), welche an die Transformations-Schaltung (13, 14) angeschlossen ist, zur Auswahl- und Betragsbildung von Chrominanzwerten (+x', /y'/),

g) Einstellmittel (25) zur Begrenzung eines Farbton-Bereiches, welche an die Auswahl- und Betrags-Schaltung (22; 24) angeschlossen sind,

h) eine Dividier-Stufe (28), die mit den Einstellmitteln (25) in Verbindung steht, zur Bildung eines Farbton-Signals (T') aus den Beträgen der ausgewählten Chrominanzwerte (+x', /y'/)

i) einen Signalgenerator (33) zur Erzeugung eines Hilfssteuersignals (H),

j) einen Farbsättigungs-Signalgenerator (35), welcher mit dem Abtastorgan (3) in Verbindung steht, zur Erzeugung eines Farbsättigungs-Signals (S'),

k) einen Luminanz-Signalgenerator (34), welcher an das Abtastorgan (3) angeschlossen ist, zur Gewinnung eines Luminanz-Signals (L') aus den Farbmesswerten,

l) einstellbare Begrenzer-Stufen (37, 38) die den Signalgeneratoren (34, 35) nachgeschaltet sind, zur Begrenzung des Farbsättigungs-Signals (S') und des Luminanz-Signals (L') und

m) Verknüpfungs-Schaltungen (46 bis 65) zur Bildung der selektiven Korrektursignale.

**Claims**

1. Process for selective correction of hues and colours of a coloured original during the production of colour separations, in which

a) the coloured original is scanned optoelectronically, dot by dot and line by line, to obtain colour value signals, the colour value signals are converted into colour signals by a first correction,

c) the area of a hue which is to be corrected selectively, or of a colour which is to be corrected selectively, is delimited within a colour space, and selective correction signals are generated if a hue or colour of the coloured original scanned falls within the area delimited, and in which

d) the selective correction signals are superimposed on the colour signals for a second correction characterized in that

e) the colour value signals (R, G, B) are converted into chrominance signals (x, y) in accordance with a transformation of the RGB colour space into the chrominance/luminance colour space, and a hue signal (T') characterizing the hues of the colours scanned is generated from the chrominance signals (x, y),

f) a colour saturation signal (S') characterizing the colour saturation of the colours scanned, and a luminance signal (L') characterizing the brightness of the colours scanned, are derived from the colour value signals (R, G, B), the hue signal (T'), the colour saturation signal (S') and the luminance signal (L') are limited in such a way that they are other than nil only for selectible areas in each case, the area of the limited hue signal (T*) defining a hue (T₀) which is to be corrected selectively, and all three areas of the limited signals (T*, S*, L*) defining a colour which is to be corrected selectively, and the selective correction signals (Y_K, M_K, C_K) are obtained from at least one of the limited signals (T*, S*, L*) or from a combination of at least one of the limited signals (T*, S*, L*) with the colour saturation signal (S') and/or the luminance signal (L').

2. Process according to claim 1, characterized in that prior to the selective colour correction

a) the colour location (F₀) of the hue (T₀) which is to be corrected selectively is determined by means of colour values (R₀, G₀, B₀),

b) the colour location (F₀) of the hue (T₀) which is to be corrected is converted by a first transformation of its colour values (R₀, G₀, B₀) into corresponding chrominance values (x'₀, y'₀) in the chrominance plane of the chrominance/luminance colour space, that the transformed colour location (F'₀) lies on one of the axial sections of an X'Y' colour co-ordinate system (16) in the chrominance plane, and that the transformation factors required for this purpose are stored, during the selective colour correction,

c) the colour locations (F) of the hues of the colours scanned are currently converted by a second transformation of the colour values (R, G, B) obtained, into chrominance values (x', y') in the chrominance plane by means of the previously determined transformation factors

d) the chrominance value (x', y') are selected whose corresponding converted colour locations (F') lie in the same half of X'Y' colour co-ordinate system (16) as the converted colour location (F'₀) of the hue (T₀) which is to be corrected selectively,

e) the quotient of the amounts of the selected chrominance values (x', y') is obtained to generate the hue signal (T'), the quotient in each case corresponding to the tangent of the angle (β) which is subtended by the axial section in question and a connecting line between the co-ordinate origin and the converted colour location (F') of the hue of a colour scanned, the hue signal (T') thereby being a measure for the momentary quantitative hue deviation of the hue of a scanned colour from the hue (T₀) which is to be corrected selectively, and

f) by combination of an essentially constant auxiliary control signal (H) and the hue signal (T') the limited hue signal (T*) is obtained which has its maximum whilst scanning the hue (T₀) which is to be corrected selectively, and the value zero whilst scanning a hue having a predetermined maximum hue deviation, whereby a sector-shaped hue area (17) is delimited around the axial section in question or rather around the hue (T₀) which is to be corrected selectively.

3. Process according to claim 1 or 2, characterized in that the colour values of the hue (T₀) which is to be corrected selectively are determined by opto-electronic measurement of a corresponding hue in the coloured original.

4. Process according to one of the claims 1-3, characterized in that the predetermined maximum hue deviation from the hue (T₀) which is to be corrected selectively or rather the angle of aperture of the hue area (17) is adjusted by amplitude variation of the chrominance values (y') at right angles to the axial section in question, of the hue signal (T') or of the auxiliary control signal (H).

5. Process according to one of the claims 1-4, characterized in that the limited hue signal (T*) is obtained by forming the difference between the auxiliary control signal (H) and the characterizing hue signal (T').

6. Process according to one of the claims 1-5, characterized in that the first transformation of the colour values (R₀, G₀, B₀) as colour values of the hue (T₀) which is to be corrected selectively, into the chrominance values (x'₀, y'₀), is performed by

a) a matrixing operation of the colour values (R₀, G₀, B₀) into the chrominance values (x₀, y₀) of an XY colour co-ordinate system (15) in the chrominance plane corresponding to a transformation of the RGB colour space into the chrominance/luminance colour space, according to the equations:

$$x_0 = a_{11} R_0 + a_{12} G_0 + a_{13} B_0$$
$$y_0 = a_{21} R_0 + a_{22} G_0 + a_{23} B_0$$

b) and by a co-ordinate rotation, depending on the position of the colour location (F₀) of the hue (T₀) which is to be corrected selectively whithin the chrominance planes, of the chrominance values (x₀, y₀) of the XY colour co-ordinate system (15) into the chrominance values x'₀, y'₀ of an X'Y' colour co-ordinate system (16) rotated through the angle (α) whith respect to the XY colour co-ordinate system (15), corresponding to a rotation of the chrominance/luminance colour space around the luminance axis (Z) according to the equations:

$$x'_0 = x_0 \cos \alpha + y_0 \sin \alpha$$
$$y'_0 = - x_0 \sin \alpha + y_0 \cos \alpha$$

the angle (α₀) operation as a transformation factor being so determined that the converted colour location (F'₀) of the hue (T₀) which is to be corrected selectively lies on one of the axial sections of the X'Y' colour co-ordinate system (16).

7. Process according to one of the claims 1-6 characterized in that the second transformation of the colour values (R, G, B) of the hues of the colours scanned into the chrominance values (x', y') of the converted colour locations (F') is performed

a) by a matrixing operation of the colour values (R, G, B) into the chrominance values (x, y) of the XY colour co-ordinate system (15) in the chrominance plane corresponding to a transformation of the RGB colour space into the chrominance/luminance colour space, according to the equations:

$$x = a_{11} R + a_{12} G + a_{13} B$$
$$y = a_{21} R + a_{22} G + a_{23} B$$

b) and by a co-ordinate rotation of the chrominance values $(x, y)$ of the XY colour co-ordinate system (15) into the chrominance values $(x', y')$ of the X'Y' colour co-ordinate system (16) through the angle $(\alpha_0)$ established, in accordance with the equations:

$$x' = \quad x \cos \alpha_0 + y \sin \alpha_0$$
$$y' = - x \sin \alpha_0 \;\; + y \cos \alpha_0$$

8. Process according to claim 6, characterized in that the angle $(\alpha)$ is varied by an automatic balancing operation until one of the chrominance values $(x'_0$ or $y'_0)$ reaches the value zero in the X'Y' colour co-ordinate system (16), the concomitantly established angle $(\alpha_0)$ being stored.

9. Process according to one of the claims 1-8, characterized in that the hue signal (T') characterizing the hue is deformed prior to being linked with the auxiliary control signal (H).

10. Process according to one of the claims 1-8, characterized in that for the purpose of generating the colour saturation signal (S'),

a) the maximum or minimum colour values are selected in each case from the colour values (R, G, B), and

b) the colour saturation signal (S') is formed from the differences between the maximum and minimum colour values.

11. Process according to one of the claims 1-9, characterized in that the auxiliary control signal (H) depends on the colour saturation values of the colours scanned in the coloured original.

12. Process according to claim 11, characterized in that the auxiliary control signal (H) is zero from the colour saturation value zero up to a limiting colour saturation value $(x_g)$ which defines the extension of a grey area around the luminance axis (Z) of the chrominance/luminance colour space, and has a constant value $(H_0)$ from the limiting colour saturation value $(x_g)$ up to maximum colour saturation values.

13. Circuitry for selective correction of hues and colours of a coloured original during the production of colour separations, comprising:

a) an opto-electronic scanning element (3) for generating colour value signals,

b) a first correction circuit (5, 6) which is connected to the scanning element (3), for generating corrected colour signals,

c) a second correction circuit which is connected to the scanning element (3), for generating selective correction signals, and

d) a superimposition stage (7) which is connected to the first and second correction circuits, for superimposition of colour signals and selective correction signals, characterized in that the second correction circuit comprises the following components:

e) a conversion circuit (13, 14) which is coupled to the scanning element (3) and converts the colour values $(R_0, G_0, B_0$ or R, G, B) into chrominance

values $(x'_0, y'_0$ or $x'$ $y')$ of an X'Y' colour co-ordinate system (16) in the chrominance plane of the chrominance/luminance colour space,

f) a selection and quantity circuit (22, 24) which is connected to the conversion circuit (13, 14) for selection and quantitative determination of chrominance values $(+x', /y'/)$,

g) setting means (25) for delimiting a hue area, which are connected to the selection and quantity circuit (22, 24),

h) a divider stage (28) which is in communication with the setting means (25), for forming a hue signal (T') from the quantities of the selected chrominance values $(+x', /y'/)$,

i) a signal generator (33) for generating an auxiliary control signal (H),

j) a colour saturation signal generator (35) which is coupled to the scanning element (3), for generating a colour saturation signal (S'),

k) a luminance signal generator (34) which is connected to the scanning element (3) for obtaining a luminance signal (L') from the colour values,

l) adjustable limiter stages (37, 38) which are post-connected to the signal generators (34, 35), for limiting the colour saturation signal (S') and the luminance signal (L'), and interlinking circuits (46 to 65) for forming the selective correction signals.

**Revendications**

1. Procédé de correction sélective des teintes de couleur ainsi que des couleurs d'un modèle en couleur lors de la réalisation d'extraits de couleur, selon lequel:

a) on affectue une détection opto-électronique point par point et ligne par ligne du modèle en couleur pour obtenir des signaux de mesure de couleur,

b) on convertit les signaux de mesure de couleur en des signaux de couleur en effectuant une première correction,

c) dans un espace couleur, on délimite le domaine d'une teinte de couleur à corriger de manière sélective ou une couleur à corriger de manière sélective et on génère des signaux de correction sélective si une teinte de couleur ou une couleur du modèle en couleur qui est détectée tombe dans la zone ainsi délimitée et selon lequel:

d) on ajoute les signaux de correction sélective pour une seconde correction des signaux de couleur, caractérisé en ce que:

e) on transforme les signaux de mesure de couleur (R, G, B) en fonction d'une tranformation de l'espace-couleur RGB dans l'espace-couleur chrominance/luminance en des signaux de chrominance $(x, y)$ et partant des signaux de chrominance $(x, y)$, on génère les teintes de couleur des couleurs détectées caractérisant le signal de teinte de couleur (T'),

f) partant des signaux de mesure de couleur (R, G, B) on dérive un signal de saturation de couleur (S') caractérisant la saturation de couleur des couleurs détectées et un signal de luminance (L') caractérisant la clarté des couleurs détectées,

g) on délimite le signal de teinte de couleur (T'), le signal de saturation de couleur (S') et le signal de luminance (L') de façon que ces signaux soient différents de zéro seulement pour des zones sélectionnées, la zone du signal de teinte de couleur délimité (T*) définissant une teinte de couleur (T₀) à corriger de manière sélective et toutes les trois zones des signaux délimités (T*, S*, L*) définissent une couleur à corriger de manière sélective et,

h) les signaux de correction sélective (Y_K, M_K, C_K) sont obtenus à partir d'au moins l'un des signaux délimités (T*, S*, L*) ou d'une combinaison d'au moins l'un des signaux délimités (T*, S*, L*) et du signal de saturation (S') et/ou du signal de luminance (L').

2. Procédé selon la revendication 1, caractérisé en ce qu'avant la correction sélective de couleur:

a) on fixe le lieu de couleur (F₀) de la teinte de couleur (T₀) qui doit être corrigée de manière sélective par les valeurs de couleur (R₀, G₀, B₀),

b) on transforme le lieu de couleur (F₀) de la teinte de couleur (T₀) à corriger par une première transformation de ces valeurs de couleur (R₀, G₀, B₀) en des valeurs de chrominance correspondantes (x'₀, y'₀) de manière telle dans le plan de chrominance de l'espace couleur chrominance/luminance que le lieu de couleur transformé (F'₀) se situe sur un segment d'axe d'un système de coordonnées de couleur X'Y' (16) dans le plan de chrominance et on conserve les coefficients de transformation nécessaires à cet effet pendant la correction de couleur sélective,

c) on transforme les lieux de couleur (F) des teintes des couleurs détectées, en continu par une seconde transformation des grandeurs de mesure de couleur obtenues (R, G, B) en valeurs de chrominance (x', y'), avec les coefficients de transformation déterminés précédemment dans le plan de chrominance,

d) on choisit celle des valeurs de chrominance (x', y') dont les lieux de couleur transformés (F') correspondants se situent dans la même moitié du système de coordonnées de couleur X'Y' (16) que le lieu de couleur transformé (F'₀) de la teinte de couleur (T₀) à corriger de manière sélective,

e) pour former le signal de teinte de couleur (T'), on forme le quotient des grandeurs des valeurs de chrominance choisies (x', y'), le quotient correspondant chaque fois à la tangente de l'angle (α) défini par le segment d'axe correspondant et une ligne de jonction entre le saut de coordonnées et le lieu de couleur transformé (F') de la teinte de couleur d'une couleur détectée, le signal de teinte de couleur (T') étant une mesure de la déviation correspondante de la grandeur de la teinte de couleur d'une couleur détectée par rapport à la teinte de couleur (T₀) à corriger sélectivement, et

f) par combinaison d'un signal de commande auxiliaire (H) essentiellement constant et du signal de teinte de couleur (T'), on forme le signal de teinte de couleur (T*) limité qui présente sa plus grande valeur à la détection de la teinte de couleur (T₀) à corriger sélectivement et dont la valeur est nulle à la détection d'une teinte de couleur ayant une déviation maximale prédéterminée de teinte de couleur, en délimitant ainsi une zone de teinte de couleur (17) en forme de secteur autour des segments d'axe correspondants ou autour de la teinte de couleur (T₀) à corriger sélectivement.

3. Procédé selon la revendication 1, ou 2, caractérisé en ce que les valeurs de couleur de la teinte de couleur (T₀) à corriger sélectivement sont déterminées par mesure opto-électronique d'une teinte de couleur correspondante dans le modèle en couleur.

4. Procédé selon l'une des revendications 1 à 3, caractérisé en ce que la déviation de teinte de couleur maximale prédéterminée par rapport à la teinte de couleur à corriger sélectivement (T₀) ou à l'angle d'ouverture de la zone de teinte de couleur (17) est réglée par variation d'amplitude des valeurs de chrominance (y') perpendiculairement au segment d'axe correspondant, du signal de teinte de couleur (T') ou du signal de commande auxiliaire (H).

5. Procédé selon l'une des revendications 1 à 4, caractérisé en ce que le signal de teinte de couleur, limité (T*) s'obtient en formant la différence entre le signal de commande auxiliaire (H) et le signal de teinte de couleur (T') à caractériser.

6. Procédé selon l'une des revendications 1 à 5, caractérisé en ce que la première transformation des valeurs de mesure de couleur (R₀, G₀, B₀) s'obtient comme grandeur de couleur de la teinte de couleur (T₀) à corriger sélectivement dans les valeurs de chrominance (x'₀, y'₀):

a) par une transformation matricielle des valeurs de couleur (R₀, G₀, B₀) en des valeurs de chrominance (x'₀, y'₀) d'un système de coordonnées de couleur XY (15) dans le plan de chrominance en fonction d'une transformation de l'espace-couleur (RGB) dans l'espace-couleur chrominance/luminance selon les équations:

$$x_0 = a_{11} R_0 + a_{12} G_0 + a_{13} B_0$$
$$y_0 = a_{21} R_0 + a_{22} G_0 + a_{23} B_0$$

b) et par une rotation de coordonnées dépendant de la position du lieu de couleur (F₀) de la teinte de couleur à corriger sélectivement (T₀) dans le plan de chrominance, tranformation appliquée aux grandeurs de chrominance (x₀, y₀) du système de coordonnées de couleur XY (15) en des valeurs de chrominance (x'₀, y'₀) d'un système de coordonnées de couleur X'Y' (16) tourné de l'angle (α) par rapport au système de coordonnées de couleur XY (15) suivant une rotation de l'espace-couleur chrominance/luminance autour de l'axe de luminance (Z) selon les équations:

$$x'_0 = x_0 \cos \alpha + y_0 \sin \alpha$$
$$y'_0 = - x_0 \sin \alpha + y_0 \cos \alpha$$

l'angle (α) étant déterminé comme coefficient de tansformation de façon que le lieu de couleur transformé (F'₀) de la teinte de couleur à corriger (T₀) se situe sur un segment d'axe du système de coordonnées de couleur X'Y'.

7. Procédé selon l'une des revendications 1 à 6, caractérisé en ce que la seconde transformation des valeurs de couleur (R, G, B) des teintes de couleur détectées en des valeurs de chrominance (x', y') du lieu de couleur (F') transformé se fait par:

a) une transformation matricielle des grandeurs de mesure de couleur (R, G, B) en des grandeurs de chrominance (x, y) du système de coordonnées de couleur XY (15) dans le plan de chrominance suivant une transformation de l'espace-couleur RGB en l'espace-couleur chrominance/luminance selon les équations:

$$x = a_{11} R + a_{12} G + a_{13} B$$
$$y = a_{21} R + a_{22} G + a_{23} B$$

b) et par une rotation des coordonnées des valeurs de chrominance (x, y) du système de coordonnées de couleur XY (15) dans les valeurs de chrominance (x', y') du système de coordonnées de couleur X'Y' (16) de l'angle ($\alpha_0$) déterminé selon les équations:

$$x' = \phantom{-} x \cos \alpha_0 + y \sin \alpha_0$$
$$y' = - x \sin \alpha_0 + y \cos \alpha_0$$

8. Procédé selon la revendication 6, caractérisé en ce que l'angle ($\alpha$) est modifié par une compensation automatique jusqu'à ce que l'une des valeurs de chrominance ($x'_0$, $y'_0$) du système de coordonnées X'Y' (16) soit nulle, l'angle ($\alpha_0$) ainsi trouvé étant conservé.

9. Procédé selon l'une des revendications 1 à 8, caractérisé en ce que le signal de teinte de couleur (T') qui caractérise la teinte de couleur est déformé par un signal de commande auxiliaire (H) avant la combinaison.

10. Procédé selon l'une des revendications 1 à 8, caractérisé en ce que pour former le signal de saturation de couleur (S'):

a) on choisit chaque fois les valeurs de mesure de couleur maximales est minimales parmi les valeurs de mesure de couleur (R, G, B) et,

b) on forme le signal de saturation de couleur (S') à partir de la différence entre les valeurs de mesure de couleur maximales et minimales.

11. Procédé selon l'une des revendications 1 à 9, caractérisé en ce que le signal de commande auxiliaire (H) dépend des grandeurs de saturation de couleur des couleurs détectées dans le modèle en couleur.

12. Procédé selon la revendication 11, caractérisé en ce que le signal de commande auxiliaire (H) est nul entre la valeur de saturation de couleur nulle jusqu'à une valeur de saturation de couleur limite ($x_g$) qui définit l'extension de la zone de gris autour de l'axe de luminance (Z) de l'espace-couleur chrominance/luminance et présente une valeur constante ($H_0$) entre la valeur de saturation de couleur limite ($x_g$) jusqu'aux valeurs de saturation de couleur maximales.

13. Circuit de correction sélective des teintes de couleur et des couleurs d'un modèle en couleur lors de la réalisation d'extraits de couleur, comprenant:

a) un organe de détection opto-électronique (3) pour former des signaux de grandeur de mesure de couleur,

b) un premier circuit de correction (5, 6) qui est relié à l'organe de détection (3) pour former les signaux de couleur corrigés,

c) un second circuit de correction relié à l'organe de détection (3) pour former des signaux de correction sélective et,

d) un étage de combinaison qui est relié au premier et au second circuit de correction et assure la combinaison de signaux de correction sélective, caractérisé en ce que le second circuit de correction comprend les composants suivants:

e) un circuit de transformation (13, 14) qui est relié à l'organe de détection (3) et transforme les grandeurs de mesure de couleur ($R_0$, $G_0$, $B_0$ ou R, G, B) en des grandeurs de chrominance ($x'_0$, $y'_0$ ou x' y') d'un système de coordonnées de couleur X'Y' (16) dans le plan de chrominance de l'espace-couleur chrominance/luminance,

f) un circuit de sélection et de grandeur (22, 24) qui est relié au circuit de transformation (13, 14) pour choisir et former les grandeurs des valeurs de chrominance (+ x', /y'/),

g) des moyens de réglage (25) pour limiter une plage de couleurs, moyens reliés au circuit de sélection et de grandeur (22, 24),

h) un étage-diviseur (28) coopérant avec les moyens de réglage (25) pour former un signal de teinte de couleur (T') à partir des grandeurs des valeurs de chrominance choisies (+ x', /y'/),

i) un générateur de signal (33) pour générer un signal de commande auxiliaire (H),

j) un générateur de signal de saturation de couleur (35) qui est relié à l'organe de détection (3) pour générer un signal de saturation de couleur (S'),

k) un générateur de signal de luminance (24) relié à l'organe de détection (3) pour former un signal de luminance (L') à partir des valeurs de mesure de couleur,

l) des étages limites, réglables (37, 38) suivis par les générateurs de signaux (34, 357) pour limiter le signal de saturation de couleur (S') et le signal de luminance (L'), et

m) des circuits de combinaison (46...65) pour former des signaux de correction sélective.

Fig.1

Fig.2

Fig.3

Fig.4

Fig.5

Fig.6

Fig.7

Fig.8

19

Fig.9

Fig.10a

Fig.10b

Fig.11

*Fig.12*

0 145 801